# EUROPÄISCHE PATENTSCHRIFT

(11) **EP 1 732 792 B1**
(45) Veröffentlichungstag und Bekanntmachung des Hinweises auf die Patenterteilung: **21.11.2012**
(21) Anmeldenummer: 05716648.0
(22) Anmeldetag: 08.02.2005
(51) Int. Cl.: B60S 1/38

(54) **WISCHBLATT**
WIPER BLADE
RACLETTE D'ESSUIE-GLACE

(30) Priorität: 26.03.2004 DE 102004015423
(43) Veröffentlichungstag der Anmeldung: 20.12.2006
(73) Patentinhaber: ROBERT BOSCH GMBH, 70442 Stuttgart (DE)
(72) Erfinder: HERINCKX, Dirk, B-3350 Linter (BE); OP'T ROODT, Inigo, B-3500 Hasselt (BE); BEELEN, Hans, B-3540 Herk de Stad (BE); VAN BEALEN, David, B-3020 Herent (BE)
(86) Internationale Anmeldenummer: PCT/EP2005/050545
(87) Internationale Veröffentlichungsnummer: WO 2005/092680

(56) Entgegenhaltungen:
- WO-A-01/30618
- WO-A-2004/056623
- DE-A1- 10 000 373

## Beschreibung

### Stand der Technik

Bei gattungsgemäßen Wischblättern soll das Tragelement über das gesamte vom Wischblatt bestrichene Wischfeld eine möglichst gleichmäßige Verteilung des von einem mit dem Wischblatt verbundenen Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Wischbetrieb des Wischblatts vollständig an der Scheibe angelegten Wischleiste durch das dann gespannte Tragelement zur Scheibe belastetet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Das Tragelement ersetzt somit die aufwändige Tragbügelkonstruktion mit zwei in der Wischleiste angeordneten losen Federschienen, wie sie bei herkömmlichen Wischblättern praktiziert wird.

Die Erfindung geht aus von einem Wischblatt, wie es durch die DE-OS 100 25 710 bekannt geworden ist. Bei den dort dargestellten Wischblättern weist das Tragelement zwei parallele Längsschienen auf, die über Brücken fest miteinander verbunden sind. Die Längsschienen greifen mit einander zugewandten Längsseiten in Nuten einer Wischleiste ein und fixieren diese damit jeweils senkrecht zur axialen Längserstreckung. Eine Brücke weist einen zungenförmigen Fortsatz auf, an dessen Ende ein Haken angeformt ist, der in Zusammenbaustellung in eine Oberseite der Wischleiste eingedrückt ist und diese damit in axialer Längsrichtung sichert. Damit ist gewährleistet, dass sich Wischleiste und Tragelement relativ zueinander in axialer Richtung bewegen können, die Wischleiste trotzdem aber axial zumindest an einem Punkt gesichert ist. Die relative Beweglichkeit in axialer Richtung ist notwendig, wenn während des Wischbetriebs das Wischblatt unterschiedlichen Krümmungsverläufen der Scheibe folgen muss. Nachteilig bei diesen Systemen ist, dass, wenn die Wischleiste verschlissen ist, das komplette Wischblatt als fertig montierte Einheit gewechselt werden muss. Soll nur die Wischleiste gewechselt werden, ist hierfür separates Werkzeuge notwendig. Außerdem besteht bei oftmaligem Wechseln der Wischleiste Ermüdungs- oder gar Bruchgefahr des zungenförmigen Fortsatzes.

Aus der nicht vorveröffentlichten WO-A-2004/056623 ist ein Wischblatt mit den Merkmalen des Oberbegriffs des Anspruchs 1 bekannt. Die Verriegelungseinrichtung besteht aus einem Befestigungsclip, der auf der Oberseite der Wischleiste fixiert ist, indem er mit seitlichen Laschen in Führungsnuten der Wischleiste eingreift und mit wenigstens einem in die Oberseite eines Basisabschnitts der Wischleiste eindrückbaren Spitzhakens mit der Wischleiste verbindbar ist. Die so vormontierte Wischleiste wird zwischen die Längsschienen geschoben, bis der Befestigungsclip unter der Brücke platziert ist, die die Längsschienen fest miteinander verbindet. In dieser Position ist der Befestigungsclip mittels einer Federzunge 42 und Anschlaghaken 40 an der Brücke gesichert. Zur Demontage wird die Federzunge entgegen der Federkraft zurückgedrückt, sodass die Wischleiste mit dem Befestigungsclip zwischen den Längsschienen hervorgezogen werden kann. Am Ende des Wischblatts ist eine Abdeckkappe vorgesehen, die in ihrer Montageposition an der Brücke verriegelt ist. Um die Montage der Wischleiste zu erleichtern, ist gemäß einer Ausführung an der Abdeckkappe ein Sicherungsbügel angelenkt. Durch die Betätigung des Bügels wird die Federzunge entriegelt, sodass die Wischleiste mit dem Befestigungsclip entfernt werden kann.

Aus der WO 01/30618 A1 ist ein Wischblatt mit zwei parallel zueinander angeordneten Längsschienen bekannt, die durch eine mehrteilige Abdeckkappe zueinander auf Abstand gehalten werden. Hierzu greifen nach außen weisende Vorsprünge der Längsschienen in entsprechende Aussparungen der Seitenwände der Abdeckkappe ein, während ein separater Zapfen nach der Montage der Abdeckkappe deren Basisplatte in einer Bohrung durchdringt und sich zwischen die einander zugewandten Längskanten der Längsschienen erstreckt.

### Vorteile der Erfindung

Das erfindungsgemäße Wischblatt mit den Merkmalen des Hauptanspruchs hat den Vorteil, dass das Auswechseln der Wischleiste ohne Werkzeug gelingt und somit vom Endverbraucher problemlos an beliebigen Orten durchgeführt werden kann. Außerdem ist die Gefahr eines Ermüdungsbruches gebannt. Dies gelingt erfindungsgemäß dadurch, dass die Verriegelungseinrichtung Bestandteil mindestens einer mehrteiligen Abdeckkappe ist. Dafür ist kein zusätzliches Teil notwendig, weil die bei diesen Wischblättern üblichen End- bzw. Abdeckkappen zu diesem Zweck verwendet werden können. Die Abdeckkappe ist hierfür mehrteilig ausgebildet und umfasst mindestens einen Grundkörper und ein bewegbares Teil wobei der Grundkörper einen Verbund zu den Längsschienen herstellt und das bewegbare Teil direkt und/oder indirekt die Wischleiste fixiert. Sollte dennoch auch hier ein Ermüdungsbruch vorkommen - was eigentlich auszuschließen ist - so kann die Endkappe als separates Teil problemlos ersetzt werden.

Durch die in den Unteransprüchen aufgeführten Maßnahmen sind vorteilhafte Weiterbildungen des erfindungsgemäßen Wischblatts möglich. Besonders einfach gelingt das Fixieren dann, wenn hierfür ein Dorn oder ein Quetschkörper Verwendung findet. Ein spitzer Dorn kann weitgehend kraftfrei in die weiche Wischleiste eingedrückt werden, während ein Quetschkörper den Vorteil genießt, den Wischleistenkörper nicht zu verletzen, wodurch ein Einreißen desselben vermieden ist.

Ist der Dorn oder der Quetschkörper am bewegbaren Teil angeordnet, erfolgt die axiale Fixierung direkt durch die vom Endverbraucher ausgeführte Bewegung. Diese kann direkt gefühlt werden, sodass hierüber eine Kontrolle der Verbindung möglich ist. Ist dagegen der Dorn oder der Quetschkörper am Grundkörper angeordnet, erfolgt die Fixierung über das bewegbare Teil indirekt. Hierdurch lässt sich der benötigte Kraftaufwand reduzieren. Es ist auch möglich, beide Varianten miteinander zu kombinieren, was die Sicherheit der Verbindung zusätzlich erhöht.

Eine montagefreundliche und einfach herzustellende Verbindung ist gegeben, weil das bewegbare Teil über eine Steck-Drehverbindung mit dem Grundkörper verbunden ist. Diese auch Bajonettverschluss genannte Verbindungsart ist allgemein bekannt und bedarf beim Endverbraucher keine tiefgreifenden Erklärungen. Andererseits birkt ein bewegliches Teil, das am Grundkörper angelegt ist, den Vorteil der Unverlierbarkeit. Dieser Vorteil ist gerade bei Montagen unter schlechten Witterungsbedingungen nicht zu vernachlässigen.

Weist das bewegliche Teil oder der Grundkörper Rampen auf, die die Brücken hinter- und/oder untergreifen können, kann dadurch eine Sicherung der Abdeckkappe relativ zum Tragelement geschaffen werden. Sind die Rampen mit Anlaufschrägen versehen, kann dieses Sicherung ohne großen Kraftaufwand geführt aufgebaut werden.

### Zeichnung

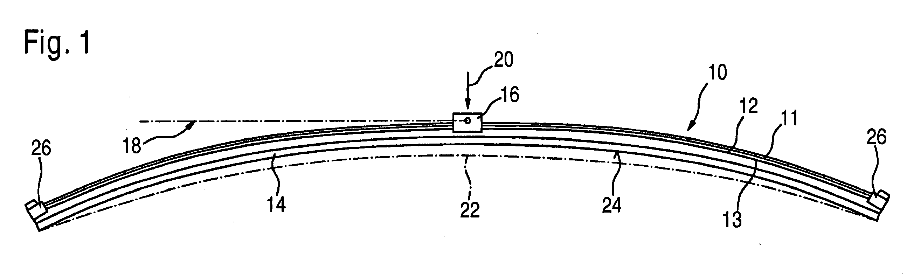

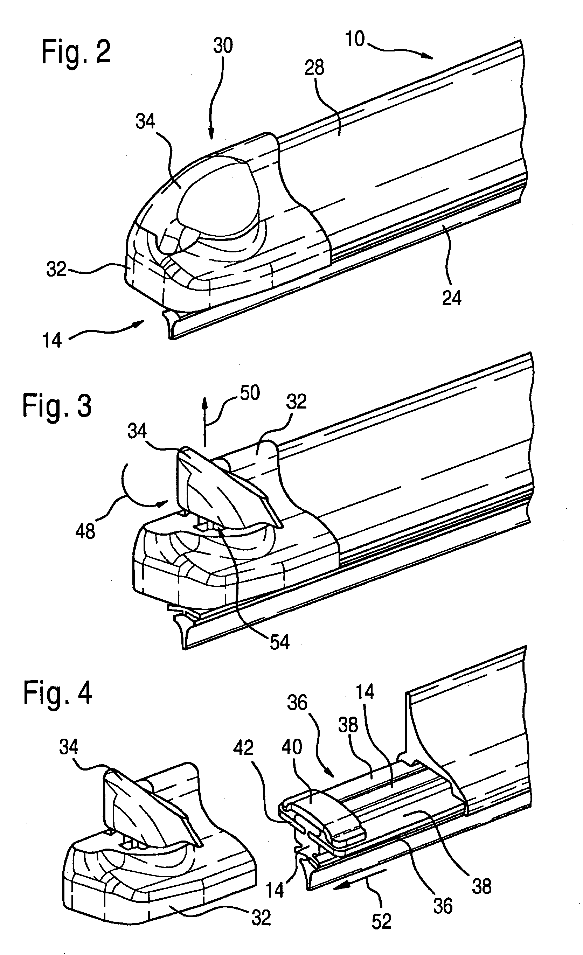

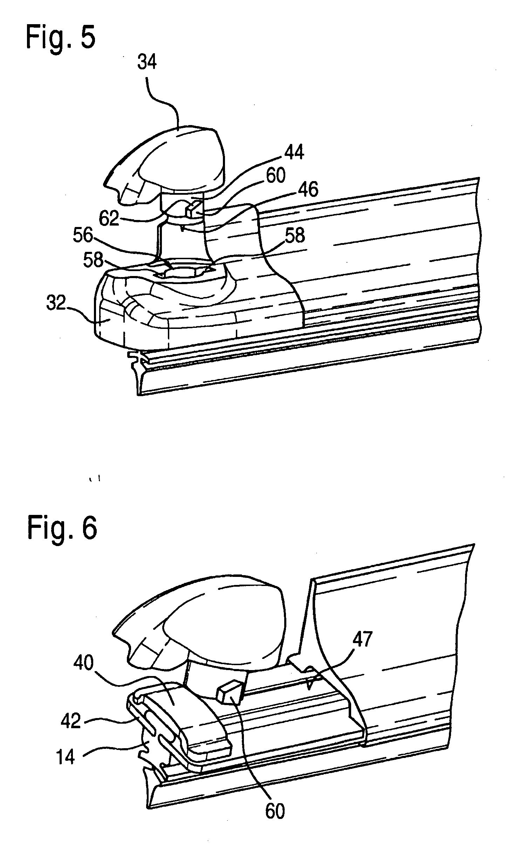

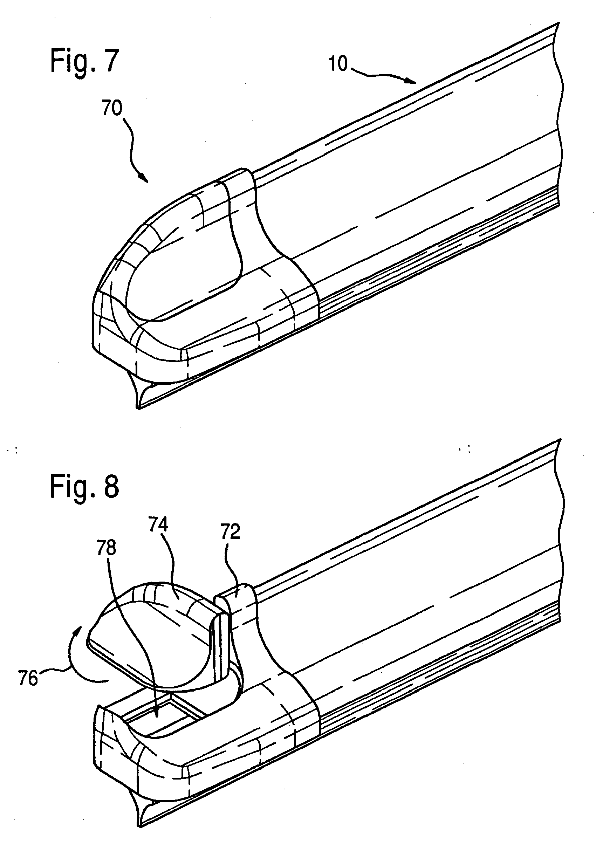

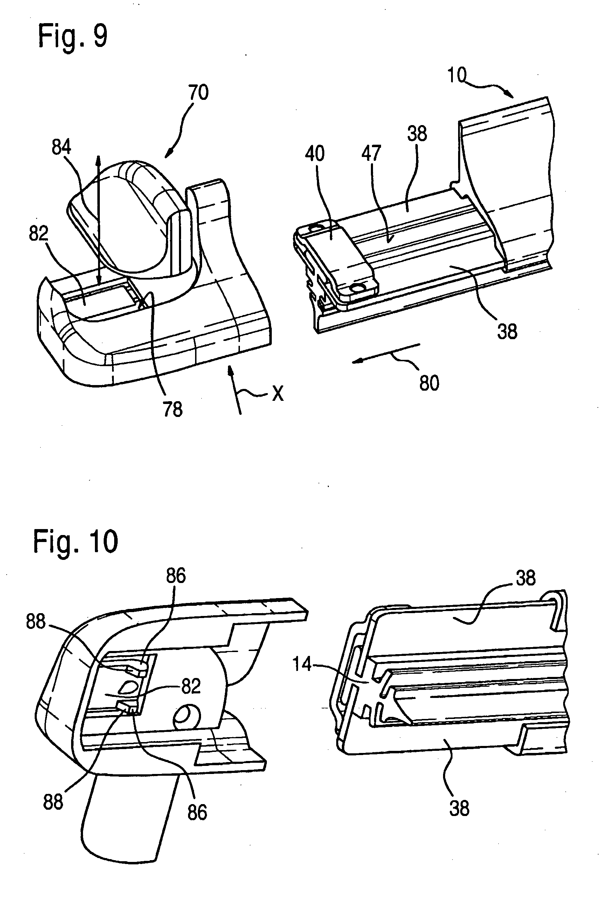

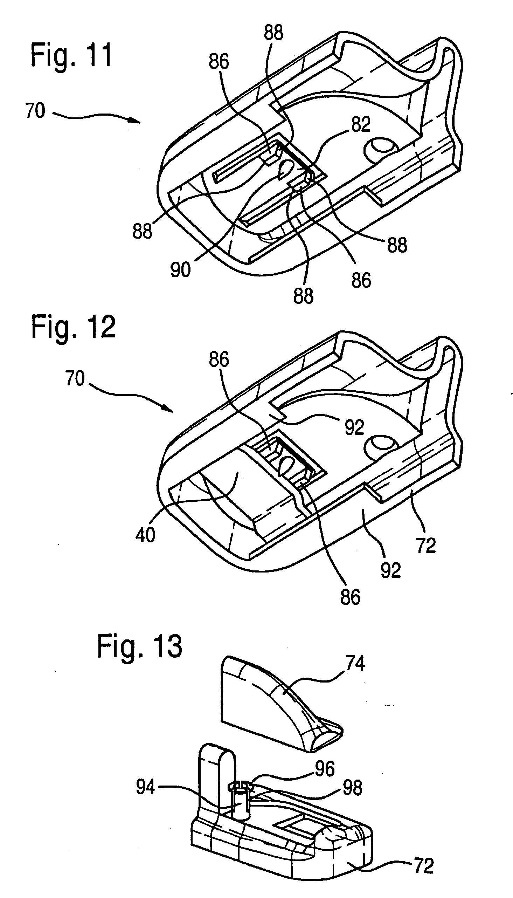

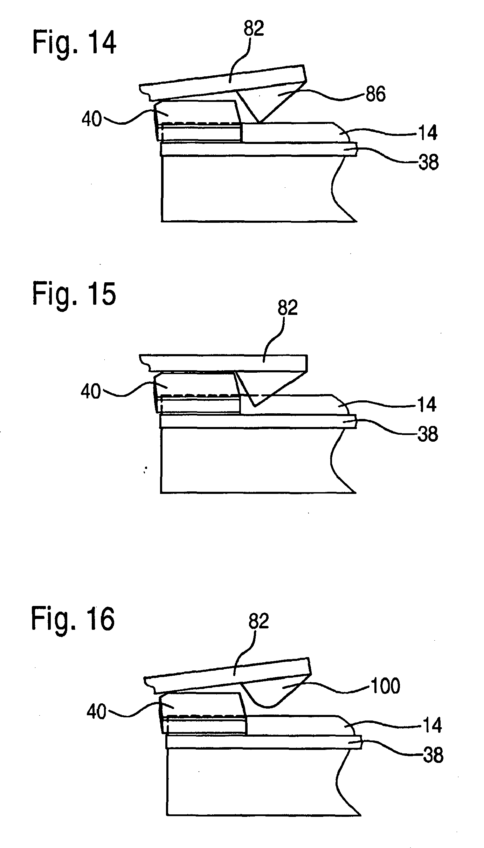

In der Zeichnung sind Ausführungsbeispiele des erfindungsgemäßen Wischblatts dargestellt und in der nachfolgenden Beschreibung näher erläutert. Es zeigen Figur 1 allgemein ein Wischblatt der gattungsgemäßen Art von der Seite, die Figuren 2 bis 4 ein Ende eines Wischblatts mit einer Abdeckkappe nach einem ersten Ausführungsbeispiel in drei Schritten zur Demontage der Abdeckkappe, Figur 5 eine Ansicht nach Figur 2 kurz vor der Montage des bewegbaren Teils, Figur 6 eine Ansicht nach Figur 2 ohne den Grundkörper, Figuren 7 bis 9 Ansichten analog den Figuren 2 bis 4 nach einem zweiten Ausführungsbeispiel, Figur 10 eine Ansicht in Richtung des Pfeils X in Figur 9, Figuren 11 und 12 Ansichten von schräg unten in eine Abdeckkappe nach dem zweiten Ausführungsbeispiel ohne bzw. mit einer Brücke, Figur 13 eine Abdeckkappe nach dem zweiten Ausführungsbeispielen mit abgenommenem bewegbaren Teil und Figuren 14 bis 16 Prinzipskizzen die das hinter-und/oder untergreifen der Rampen in verschiedenen Varianten sowie einen Quetschkörper darstellen.

### Beschreibung

Ein in Figur 1 gezeigtes Wischblatt 10 weist ein bandartig langgestrecktes, federelastisches Tragelement 12 auf, an dessen Unterseite 13 eine langgestreckte, gummielastische Wischleiste 14 längsachsenparallel angeordnet ist. An der Oberseite 11 des auch als Federbalken zu bezeichnenden Tragelements 12 ist in dessen Mittelabschnitt das wischblattseitige Teil einer Anschlussvorrichtung 16 direkt angeordnet, mit deren Hilfe das Wischblatt 10 gelenkig mit einem in Figur 1 strichpunktiert angedeuteten, angetriebenen Wischerarm 18 lösbar verbunden werden kann. Dazu ist der Wischarm 18 an seinem freien Ende mit dem wischerarmseitigen Teil der Anschlussvorrichtung versehen. Der Wischarm 18 ist in Richtung des Pfeiles 20 zur zu wischenden Scheibe - beispielsweise zur Windschutzscheibe eines Kraftfahrzeuges - belastet, deren zu wischende Oberfläche in Figur 1 durch eine strichpunktiert Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts 10 stärker ist als die maximale Scheibenkrümmung. Unter dem Anpressdruck (Pfeil 20) legt sich das Wischblatt 10 mit seiner Wischlippe 24 über seine gesamte Länge an der Scheibenoberfläche 22 an. Dabei baut sich im beispielsweise aus Metall gefertigten, federelastischen Tragelement 12 eine Spannung auf, welche für eine ordnungsgemäße Anlage der Wischleiste 14 beziehungsweise der Wischlippe 24 über deren gesamte Länge an der Scheibe sowie für eine gleichmäßige Verteilung des Anpreßdrucks sorgt. An jedem in Längsrichtung gesehenen Ende ist das Tragelement 12 von jeweils einer Abdeckkappe 26 übergriffen, die relativ flach auf dem Tragelement 12 aufliegen können, da das in Figur 1 dargestellte Wischblatt 10 keine Windabweisleiste aufweist.

In den nachfolgenden Figuren werden nun Abdeckkappen nach verschiedenen Ausführungsbeispielen und Varianten gezeigt und in der Beschreibung erläutert wobei gleiche Bauteile mit gleichem Bezugszahlen versehen sind.

Das in Figur 2 gezeigte Wischblatt 10 weist eine das Tragelement 12 übergreifende Windabweisleiste 28 auf, die von der Abdeckkappe 30 nach dem ersten Ausführungsbeispiel ihrerseits übergriffen und abgedeckt ist. Im Bereich dieses übergreifens besitzt die Abdeckkappe 30 die geschwungene Form der Windabweisleiste 28. Die Abdeckkappe 30 ist mehrteilig - in diesem Fall zweiteilig - ausgebildet und umfasst einen Grundkörper 32 und ein bewegbares Teil 34, das einen Übergang von der geschwungenen Form zum Ende des Wischblatts 10 hin auslaufend bildet. Der Grundkörper 32 übergreift das Tragelement 12, das zwei Längsschienen 38 umfasst, die über Brücken 40 relativ zueinander fixiert sind (Figur 4), an seinen Außenflanken 36 sowie am Längsende 42 und stellt damit einen Verbund zu den Längsschienen 38 bzw. dem Tragelement 12 her. Das bewegbare Teil 34 ist einerseits im Grundkörper 32 drehbar gelagert und vermag andererseits die Wischleiste 14 in ihrer Position gegen axiales Verschieben zu sicheren.

Wie in Figur 5 zu sehen ist, besitzt das bewegbare Teil 34 an einem in Einbaurichtung der Wischleiste 14 weisenden Schaft 44 einen Dorn 46, der in endgültiger Einbaulage - wie sie in Figur 6 erkennbar ohne den Grundkörper 32 dargestellt ist - in die Oberseite 47 der Wischleiste 14 eingepresst ist. Der Schaft 44 liegt dann an der Brücke 40 an und verhindert, dass die Abdeckkappe 30 in Richtung des Längsendes 42 verschoben werden kann. Da der Grundkörper 32 an der anderen Seite der Brücke 40 anliegt ist die Endkappe 30 in ihrer axialen Position festgelegt. Durch den Dorn 46, der bis in die Wischleiste 14 reicht, ist damit auch die Wischleiste 14 an diesem Punkt in ihrer axialen Position gesichert. Selbstverständlich kann der Dorn 46 auch andere Formen annehmen und beispielsweise als eine oder mehrere Schneiden, als eine spitze Wabenstruktur oder dergleichen ausgebildet sein.

Die Figuren 2 bis 4 zeigen der Reihe nach die Schritte, die notwendig sind, um die Abdeckkappe 30 vom Wischblatt 10 zu entfernen. Danach wird das bewegbare Teil 34 von seiner in Figur 2 dargestellten Betriebsposition entlang des Pfeiles 48 verdreht und nach oben in Richtung des Pfeiles 50 zumindest ein Stück weit angehoben. In dieser Position ist sowohl der Schaft 44 als auch der Dorn 46 nicht mehr im Eingriff bzw. soweit von der Oberseite 47 der Wischleiste 14 entfernt, dass die Abdeckkappe 30 in Richtung des Pfeils 52 abgezogen werden kann und sowohl der Schaft 44 als auch der Dorn 46 über die Brücke 40 geführt werden.

In der in Figur 4 dargestellten Position kann dann die Wischleiste 14 entlang den Längsschienen 38 aus aus dem Tragelement 12 herausgezogen und eine neue Wischleiste 14 wieder eingefädelt werden.

Die Montage der Abdeckkappe 30 gelingt in umgekehrter Reihenfolge. Die Abdeckkappe 30 wird entgegen dem Pfeil 52 aufgeschoben, das bewegbare Teil 34 entgegen dem Pfeil 50 eingesteckt und entgegen dem Pfeil 48 verdreht.

Durch den obengenannten Bewegungsablauf ist bereits verdeutlicht, dass das bewegbare Teil 34 über eine Steck-Drehverbindung 54 verbunden ist. Der Grundkörper 32 weist hierzu eine kreisförmige Öffnung 56 auf, die mit radialen Ausnehmungen 58 versehen ist. Im vorliegenden Fall sind zwei radiale Ausnehmungen 58 vorgesehenen, wobei diese Anzahl jedoch variieren kann. Der Schaft 44 des bewegbaren Teils 34 weist einen Außendurchmesser auf, der dem Kreisdurchmesser der Öffnung 56 entspricht. Außerdem sind am Schaft 44 Rampen 60 angebracht (von denen nur eine in den Figuren 5 und 6 zu sehen ist), die in die radialen Ausnehmungen 58 eingeführt werden können. In Figur 5 ist das bewegbare Teil 34 in einer Positionen oberhalb des Grundkörpers 32 dargestellt, in der es in seiner geschlossen Stellung positioniert wäre. Zum Einführen des bewegbaren Teils 34 in die kreisförmige Öffnung 56 muss - wie ersichtlich - das bewegbares Teil um 90 Grad gegen den Uhrzeigersinn verdreht sein. Beim Eindrehen entgegen dem Pfeil 48 untergreifen die Rampen 60 bei diesem Ausführungsbeispiel den Grundkörper 32 und gelangen, wie in Figur 6 ohne den Grundkörper dargestellt, außerhalb der Brücken 40 in ihre Endposition. Der Schaft 44 und die Rampen 60 hintergreifen damit die Brücken 40.

Alternativ können die Rampen 60 am Schaft 44 um 90 Grad verdreht angeordnet sein - was auch eine entsprechende Korrektur der radialen Ausnehmungen 58 bedingen würde -, sodass in der geschlossen Stellung die Rampen 60 die Brücken 40 untergreifen.

An den Rampen 60 sind Anlaufschrägen 62 angeformt, die bei einer Verdrehung entgegen dem Pfeil 48 das bewegbare Teil 34 in Richtung entgegen dem Pfeil 50 zwangsweise führen. Damit wird der Kraftaufwand, der benötigt wird, um das bewegbare Teil 34 mit seinem Dorn 46 in die Wischleiste 14 einzudrücken, erheblich reduziert.

In den Figuren 7 bis 9 ist analog zu den Figuren 2 bis 4 gezeigt, wie eine Abdeckkappe 70 nach einem zweiten Ausführungsbeispiel vom Ende des Wischblatts 10 abgenommen werden kann. Die Abdeckkappe 70 weist einen Grundkörper 72 sowie ein bewegliches Teil 74 auf, das zum Öffnen relativ zum Grundkörper 72 in Richtung des Pfeils 76 verdreht wird und damit eine Öffnung 78 im Grundkörper 72 freigibt. Die Abdeckkappe 70 ist dann entlang des Pfeiles 80 vom Ende des Wischblatts 10 abziehbar. Während des Abziehvorgangs bewegt sich eine federnde Zunge 82 in Richtung des Doppelpfeils 84 zuerst nach oben in die Öffnung 78 hinein, um dann wieder nach unten zu federn.

In Figur 10, die eine Ansicht in Richtung des Pfeiles X in Figur 9 zeigt, ist erkennbar, dass an der federnden Zunge 82 zwei Rampen 86 angeformten sind, die während des Abziehens über die Brücke 40 gezogen werden und damit die Hubbewegung in Richtung des Doppelpfeils 84 auslösen.

Um diese Hubbewegung problemlos zu ermöglichen, weisen die Rampen 86 Anlaufschrägen 88 auf, die beidseitig angebracht sind und so sowohl beim Abziehen als auch beim Aufstecken der Abdeckkappe 70 in Eingriff gelangen. Die Anlaufschrägen 88 sind hier eben gezeichnet, sie können jedoch auch gekrümmte sein beispielsweise in Form einer Hohlkehle.

An der Zunge 82 ist ferner ein Dorn 90 angeformt, der in Zusammenbaustellung in die Oberseite 47 der Wischleiste 14 eingreift Durch diesen Dorn 90 ist die Wischleiste 14 in axialer Richtung gegen Verschieben an diesem Punkt fixiert. Beim Abziehen der Abdeckkappe 70 wird der Dorn 90 durch die von den Rampen 86 veranlasste Hubbewegung der federnden Zunge 82 aus der Wischleiste 14 herausgezogen, sodass die Abdeckkappe 70 bewegt werden kann ohne die Wischleiste 14 zu beschädigen. In einer in den Figuren 14 und 15 dargestellten Variante ist eine Rampe 86 als Dorn 90 ausgebildet und übernimmt damit neben der Sicherung der Abdeckkappe 70 auch die Fixierung der Wischleiste 14. In Figur 16 ist der Dorn als Quetschkörper 100 dargestellt, der lediglich die Wischleiste 14 derart verquetscht, dass sie sich zwischen den Längsschienen 38 und/oder der Brücke 40 verspannt und damit gegen axiales Verschieben fixiert ist. Diese Variante kann auch im ersten Ausführongsbeispiel verwirklicht sein.

In den Figuren 11 und 12 ist die Abdeckkappe 70 dargestellt, wobei in Figur 12 zusätzlich eine Brücke 40 eingezeichnet ist. Es ist erkennbar, wie die Rampen 86 am Rand der Brücke 40 anliegen, sodass die axiale Sicherung gewährleistet ist. Es ist ferner erkennbar, dass am Grundkörper 72 Führungsschienen 92 angeformten sind, die den Randbereich der Brücke 40 und damit in Zusammenbaustellung die Längsschienen 38 umfassen. Es ist auf diese Weise ein Verbund vom Grundkörper 72 zu den Längsschienen 38 hergestellt. In gleicher Weise ist auch der Verbund des Grundkörpers 32 der Abdeckkappe 30 des ersten Ausführungsbeispiels zu den Längsschienen 38 hergestellt.

Aus dem Grundkörper 72 ragt eine Achse 94, an der das bewegliche Teil 74 drehbar gelagert ist. Die Achse 94 ist an den als Spritzgussteil ausgebildeten Grundkörper 72 direkt angeformt. Sie weist einen Kragen 96 sowie einen Schlitz 98 auf, die es ermöglichen das bewegliche Teil 74 aufzuclipsen.

Statt einer Steck-Drehverbindung oder einer Gelenkverbindung ist es auch denkbar, das bewegbare Teil 34 des ersten Ausführungsbeispiels bzw. 74 des zweiten Ausführungsbeispiels anders zu befestigen, beispielsweise über ein Filmscharniergelenk oder eine Rastverbindung. Die in diesem Sinne ist der Begriff" mehrteilig " in Bezug auf die Funktionalität der Abdeckkappe zu verstehen.

## Patentansprüche

1. Wischblatt (10) mit einem Tragelement (12), an dessen einen Seite eine Wischleiste (14) und an dessen anderen Seite eine Anschlussvorrichtung (16) für einen Wischarm (18) anbringbar ist und das zwei Längsschienen (38) umfasst, die über Brücken (40) relativ zueinander fixiert und mittels Abdeckkappen (26, 30, 70) an ihren Enden (42) abgedeckt sind, wobei mindestens eine Abdeckkappe (26, 30, 26) mehrteilig ausgebildet ist und einen Grundkörper (32, 72) und mindestens ein bewegbares Teil (34, 74) umfasst, wobei der Grundkörper (32, 72) einen Verbund zu den Längsschienen (38) herstellt und das bewegbare Teil (34, 74) direkt und/oder indirekt die Wischleiste (14) fixiert, **dadurch gekennzeichnet, dass** das bewegbare Teil (34) über eine Steck-Drehverbindung (54) mit dem Grundkörper (32) verbunden ist.

2. Wischblatt nach Anspruch 1, **dadurch gekennzeichnet, dass** die Wischleiste (14) mittels mindestens eines Doms (46,90) oder mindestens eines Quetschkörpers (100) relativ zum Tragelement (12) fixiert ist.

3. Wischblatt nach Anspruch 2, dadurch gekenntzeichnet, dass der mindestens eine Dorn (46, 90) oder der mindestens eine Quetschkörper (100) am bewegbaren Teil (34,74) angeordnet ist.

4. Wischblatt nach einem der vorhergehenden Ansprüche, **dadurch gekennzeichnet, dass** das bewegbare Teil (34, 74) Rampen (60, 86) aufweist, die die Brücken (40) hinter- und/oder untergreifen können.

5. Wischblatt nach einem der Anspruche 1 bis 3, **dadurch gekennzeichnet, dass** der Grundkörper (32, 72) Rampen (60, 86) aufweist, die die Brücken (40) hinter- und/oder untergreifen können.

6. Wischblatt nach Anspruch 4 oder 5, **dadurch gekennzeichnet, dass** die Rampen (60, 86) Anlaufschrägen (62, 88) aufweisen.

## Claims

1. Wiper blade (10) with a supporting element (12), to one side of which a wiper strip (14) is attachable and to the other side of which a connecting device (16) for a wiper arm (18) is attachable and which comprises two longitudinal rails (38) which are fixed relative to each other via bridges (40) and are covered at the ends (42) thereof by means of covering caps (26, 30, 70), wherein at least one covering cap (26, 30, 70) is of multi-part design and comprises a basic body (32, 72) and at least one movable part (34, 74), wherein the basic body (32, 72) produces a bond with the longitudinal rails (38) and the movable part (34, 74) directly and/or indirectly fixes the wiper strip (14), **characterized in that** the movable part (34) is connected to the basic body (32) via a plug-in and rotate connection (54).

2. Wiper blade according to Claim 1, **characterized in that** the wiper strip (14) is fixed relative to the supporting element (12) by means of at least one spike (46, 90) or at least one squeezable body (100).

3. Wiper blade according to Claim 2, **characterized in that** the at least one spike (46, 90) or the at least one squeezable body (100) is arranged on the movable part (34, 74).

4. Wiper blade according to one of the preceding claims, **characterized in that** the movable part (34, 74) has ramps (60, 86) which can engage behind and/or under the bridges (40).

5. Wiper blade according to one of Claims 1 to 3, **characterized in that** the basic body (32, 72) has ramps (60, 86) which can engage behind and/or under the bridges (40).

6. Wiper blade according to Claim 4 or 5, **characterized in that** the ramps (60, 86) have run-on slopes (62, 88).

## Revendications

1. Balai d'essuie-glace (10) comprenant un élément porteur (12) sur un côté duquel peut être montée une raclette d'essuie-glace (14) et sur un autre côté duquel peut être monté un dispositif de raccordement (16) pour un bras d'essuie-glace (18), et qui comprend deux rails longitudinaux (38), qui sont fixés l'un par rapport à l'autre par le biais de ponts (40) et qui sont recouverts à leurs extrémités (42) au moyen de capuchons de recouvrement (26, 30, 70), au moins un capuchon de recouvrement (26, 30, 70) étant réalisé en plusieurs parties et comprenant un corps de base (32, 72) et au moins une partie mobile (34, 74), le corps de base (32, 72) établissant une connexion avec les rails longitudinaux (38) et la partie mobile (34, 74) fixant directement et/ou indirectement la raclette d'essuie-glace (14), **caractérisé en ce que** la partie mobile (34) est connectée au corps de base (32) par le biais d'une connexion rotative enfichable (54).

2. Balai d'essuie-glace selon la revendication 1, **caractérisé en ce que** la raclette d'essuie-glace (14) est fixée au moyen d'au moins un goujon (46, 90) ou d'au moins un corps d'écrasement (100) par rapport à l'élément porteur (12).

3. Balai d'essuie-glace selon la revendication 2, **caractérisé en ce que** l'au moins un goujon (46, 90) ou l'au moins un corps d'écrasement (100) est disposé sur la partie mobile (34, 74).

4. Balai d'essuie-glace selon l'une quelconque des revendications précédentes, **caractérisé en ce que** la partie mobile (34, 74) présente des rampes (60, 86) qui peuvent venir en prise par l'arrière et/ou par le dessous avec les ponts (40).

5. Balai d'essuie-glace selon l'une quelconque des revendications 1 à 3, **caractérisé en ce que** le corps de base (32, 72) présente des rampes (60, 86) qui peuvent venir en prise par l'arrière et/ou par le dessous avec les ponts (40).

6. Balai d'essuie-glace selon la revendication 4 ou 5, **caractérisé en ce que** les rampes (60, 86) présentent des biseaux de montée (62, 88).
